Europäisches Patentamt

European Patent Office

Office européen des brevets

(11) Veröffentlichungsnummer: **0 215 219**
**B1**

(12) **EUROPÄISCHE PATENTSCHRIFT**

(45) Veröffentlichungstag der Patentschrifft:
07.02.90

(21) Anmeldenummer: 86109166.8

(22) Anmeldetag: 04.07.86

(51) Int. Cl.⁵: **F 01 P 7/08**, F 01 P 11/14,
**B 60 K 11/00**

(54) Kühlanlage für Brennkraftmaschine mit einem ausschaltbaren Lüftergebläse.

(30) Priorität: 17.09.85 DE 3533093

(43) Veröffentlichungstag der Anmeldung:
25.03.87 Patentblatt 87/13

(45) Bekanntmachung des Hinweises auf die Patenterteilung:
07.02.90 Patentblatt 90/06

(84) Bennante Vertragsstaaten:
DE FR GB IT SE

(56) Entgegenhaltungen:
DE-A-2 645 733
DE-A-3 445 878
US-A-2 206 094
US-A-2 576 017
US-A-2 756 085
US-A-2 876 856
US-A-3 171 392

Dubbel, Maschinenbau, S.330

(73) Patentinhaber: Dr.Ing.h.c. F. Porsche Aktiengesellschaft
Porschestrasse 42
D-7000 Stuttgart 40 (DE)

(72) Erfinder: Mayer, Karl-Heinz, Ing.grad.
Albrechtstrasse 14
D-7050 Waiblingen-Hohenacker (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Kühlanlage für Brennkraftmaschine mit einem zuschaltbaren Lüftergebläse

Die Erfindung betrifft eine Kühlanlage für Brennkraftmaschinen nach der Gattung des Hauptanspruchs.

Insbesondere Brennkraftmaschinen von Fahrzeugen werden immer häufiger mit Kühlanlagen ausgestattet, deren Lüftergebläse abhängig vom Kühlluftbedarf der Brennkraftmaschine steuerbar sind. Bei derartigen Kühlanlagen kommt es häufig zu Verletzungen an Körperteilen von in unmittelbarer Nähe des Lüftergebläses arbeitenden Wartungspersonen, wenn dieses plötzlich und unvermittelt anläuft.

Aus diesem Grunde wurden in Kraftfahrzeugen bereits Schutzgitter eingebaut, in denen bewegliche Teile des Lüfters angeordnet sind. Ihnen haftet jedoch der Nachteil an, daß sie einerseits nur einen bedingten Schutz vor Verletzungen bieten, andererseits jedoch den Luftdurchsatz - insbesondere wegen ihrer Anfälligkeit für Verschmutzungen - stark vermindern.

Mit der US-PS-2 756 085 ist ferner ein Schließmechanismus für Motorhauben von Fahrzeugen bekannt geworden, bei dem die Schließstellung der Haube mittels eines Schalters überwacht wird. Der an dem Schalter angeschlossene Signalkreis dient jedoch nur dazu, einen Fahrer bei Antritt oder während der Fahrt vor einer nicht vollständig geschlossenen Motorhaube zu warnen.

Es ist daher Aufgabe der Erfindung, eine Kühlanlage für Brennkraftmaschinen mit zuschaltbarem Lüftergebläse zu schaffen, die Verletzungen an Körperteilen von einer Wartungsperson, insbesondere an ihren Händen und Armen sicher vermeiden hilft, ohne den Betrieb der Brennkraftmaschine oder der für sie notwendigen Kühlanlage merklich zu beeinträchtigen.

Die Aufgabe wird mit den kennzeichnenden Merkmalen des Anspruchs 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß eine Kühlanlage für Brennkraftmaschinen mit zuschaltbarem Lüftergebläse geschaffen ist, die Verletzungen an Körperteilen einer Wartungsperson sicher vermeiden. hilft, ohne den Betrieb der Brennkraftmaschine und deren Kühlanlage merklich zu stören. Die zur Erreichung dieses Ziels notwendigen zusätzlichen Maßnahmen zeichnen sich durch geringen Aufwand aus, sind kostengüstig herstellbar und zudem zur Nachrüstung bestehender Fahrzeuge geeignet.

Die Erfindung wird nachstehend anhand von in den Zeichnungen dargestellten Beispielen näher erläutert. Es zeigt

Fig. 1 ein Schnittbild eines Brennkraftmaschinenraums eines Kraftfahrzeuges,

Fig. 2 ein elektrisches Schaltbild für ein elektromotorisch angetriebenes Lüftergebläse,

Fig. 3 ein Schaltbild nach Fig. 2, jedoch mit einem Steuergerät für das Lüftergebläse,

Fig. 4 Schaltbilder des Steuergeräts nach Fig. bis 8 3, entsprechend einer ersten bis fünften Variante.

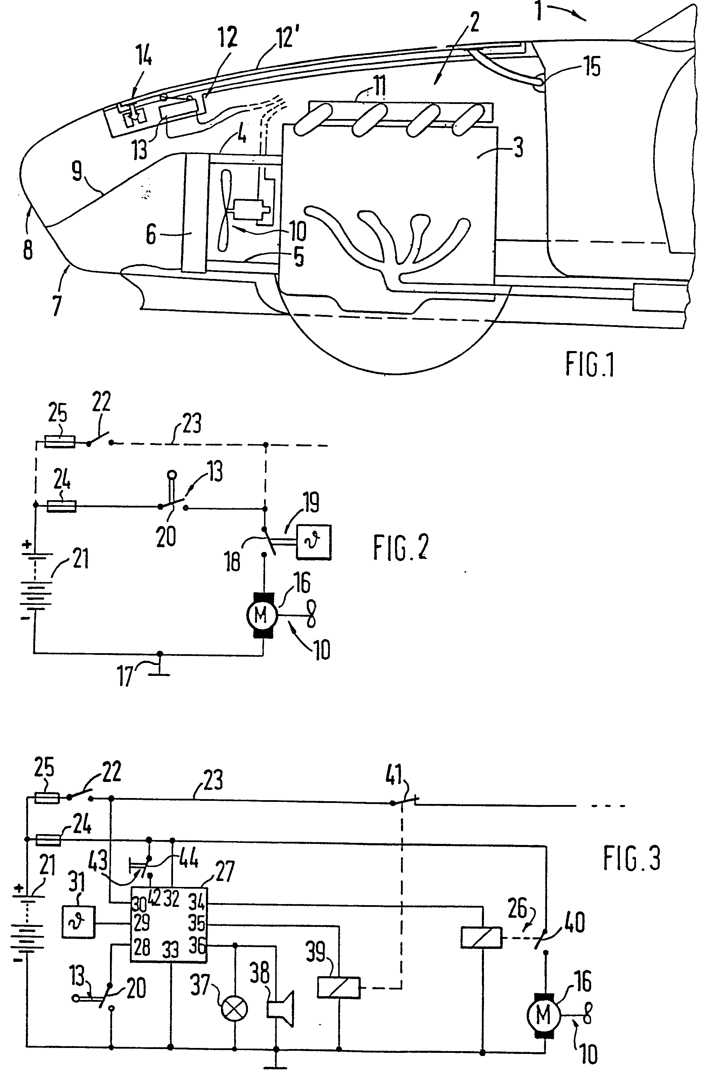

In Fig. 1 ist mit 1 ein Kraftfahrzeug gezeigt, in dessen Vorderbau bzw. Brennkraftmaschinenraum 2 eine Brennkraftmaschine 3 angeordnet ist. Diese ist über Kühlmittelleitungen 4, 5 mit einem Flüssigkeitskühler 6 verbunden, der über eine Karosserieöffnung 7 an einem Wagenbug 8 und eine Kühlluftführung 9 mit Fahrtwindkühlluft beaufschlagt wird.

Bei stehendem Kraftfahrzeug oder wenn die Fahrtwindkühlung aufgrund zu niedriger Geschwindigkeit nicht ausreicht, kann der Flüssigkeitskühler 6 bzw. die Brennkraftmaschine 3 über ein elektromotorisch angetriebenes Lüftergebläse 10 zwangsgekühlt werden, wenn eine Temperatur im Kühlsystem und/oder der Brennkraftmaschine einen bestimmten Grenzwert überschreitet. Diese Zwangskühlung wird bei modernen Kraftfahrzeugen in zunehmendem Maße auch dann eingesetzt, wenn sich - nach Abstellen der Brennkraftmaschine aufgrund der in ihr gespeicherten Restwärme - der Brennkraftmaschinenraum 2 zu stark erwärmt. Auf diese Weise kann verhindert werden, daß - nicht gezeigte Kraftstoffleitungen, die im Bereich einer Saugrohranlage 11 verlegt sind, über den Siedepunkt des Kraftstoffs hinaus erwärmt werden; eine zu Startschwierigkeiten führende Dampfblasenbildung im Kraftstoffsystem wird somit sicher vermieden.

Mit dem Einsatz derartiger, lediglich zeitweise zugeschalteter elektromotorisch angetriebener Lüftergebläse sind jedoch die Anzahl von Verletzungen an Gliedmaßen des Wartungspersonals für Kraftfahrzeuge, insbesondere an Händen und Armen, sprunghaft angestiegen; besonders dann, wenn eine Wartungsperson arglos im Bereich des - stehenden - Lüfters gearbeitet hat und dieser plötzlich und für sie völlig unerwartet angelaufen ist.

Um ein derartiges, unerwartetes Anlaufen des Lüftergebläses entweder zu vermeiden oder um das Wartungspersonal davor zu warnen, ist an einem Rahmen 12, in dem eine Klappe (Motorhaube) 12' im geschlossenem Zustand gelagert ist, ein Schalter (Berührungsschalter) 13 angeordnet. Als besonders günstig hat sich hierbei ein Anordnungsbereich erwiesen, der sich in einer, einem Verschlußmechanismus 14 benachbarten und von einem Drehpunkt 15 der Motorhaube 12' entfernten Lage des Rahmens 12 befindet. Der Schalter ist bei geöffneter Motorhaube 12' unbetätigt und kann hierbei entweder eine Energie - bzw. Stromzufuhr zum Lüftergebläse direkt unterbrechen oder auf ein Steuergerät einwirken, das das Lüftergebläse beeinflußt oder ein Warnsignal abgibt oder die Brennkraftmaschine gegebenenfalls abschaltet.

Bei dem Schalter 13 kann es sich selbstverständlich auch um einen Näherungsschalter handeln; ebenso kann ein Neigungs-(Quecksilber-) schalter verwendet werden, der an der Motorhaube 12' befestigt ist und seine Kontakte in deren Öffnungsstellung öffnet.

In Fig. 2 ist gezeigt, wie ein Elektromotor 16 zum Antrieb des elektromotorisch angetriebenen Lüftergebläses 10 mit dem Berührungsschalter 13 verbunden ist. Der Elektromotor 16 liegt mit seinem einen Pol an einer Fahrzeugmasse 17 und ist mit seinem anderen Pol über einen Schließerkontakt 18 eines, eine Motortemperatur überwachenden Thermoschalters 19 und einen Schließerkontakt 20 des Berührungsschalters 13 mit einem Pluspol (+) einer Fahrzeugbatterie 21 verbunden, deren Minuspol (-) ebenfalls an Fahrzeugmasse 17 liegt. Der Berührungsschalter 13 ist bei geschlossener Motorhaube 12 betätigt, so daß der Schließer 20 den Stromkreis zwischen Batterie 21 und Thermoschalter 19 schließt. Das Lüftergebläse 10 kann somit in Abhängigkeit vom Thermoschalter 19 gesteuert werden. Wird dagegen die Motorhaube 12' geöffnet, so trennt der Schließer 20 den Elektromotor 16 des Lüftergebläses 10 von der Batterie 21. Das Lüftergebläse 10 kann somit keine Handverletzungen mehr beim Wartungspersonal hervorrufen.

Da die Mehrzahl der Verletzungen jedoch bei abgestellter Brennkraftmaschine erfolgt (das Wartungspersonal ist dann offensichtlich nicht mehr so vorsichtig, da man bei laufendem Motor ja mit dem Anlaufen des Lüftergebläses 10 rechnen muß), kann es auch ausreichen, das Lüftergebläse 10 lediglich bei abgestellter Brennkraftmaschine von der Batterie 21 zu trennen, wenn zusätzlich die Motorhaube 12' geöffnet ist. Dies kann dadurch erfolgen, daß ein Zündschalter 22 eines Zündstromkreises 23 parallel zum Berührungsschalter 13 gelegt ist (gestrichelt gezeichnet). Die Stromkreise sind jeweils durch Sicherungen 24, 25 abgesichert.

Eine etwas umfangreichere Ausführung ist in Fig. 3 gezeigt. Das Lüftergebläse wird hierbei über ein elektronisches oder elektromechanisches Relais 26 von einem Steuergerät 27 geschaltet; selbstverständlich kann das Relais 26 auch im Steuergerät 27 enthalten sein.

Das Steuergerät 27 erhält, je nach Ausstattung, an seinen Eingängen 28, 29 und 30 Signale vom Berührungsschalter 13, einem die Motortemperatur überwachenden Temperaturschalter oder Temperatursensor 31 und dem Zündschalter 22. Über die Klemmen 32 und 33 wird es mit dem nötigen Betriebsstrom versorgt. Mit den Ausgängen 34, 35 und 36 werden das Relais 26 und je nach Ausstattung, ein ein optisches/akustisches Signal abgebender Signalgeber (Warnleuchte 37 und/oder Warnsummer 38) und ein Relais 39 zum Unterbrechen des Zündstroms und/oder der Brennstoffversorgung angesteuert. Die Zuschaltung des Lüftergebläses erfolgt hierbei mittels eines vom Relais 26 betätigten Schließers 40, das Unterbrechen des Zündstroms mittels eines vom Relais 39 angesteuerten Öffners 41. Am Steuergerät 27 kann ferner noch ein weiterer Eingang 42 vorgesehen werden, der von einem handbetätigten Tastschalter 43 (mit Schließerkontakt 44 gegen Pluspol (+)) beeinflußt wird und später noch erklärt werden soll.

Mit dem Steuergerät 27 sind nun verschiedene Varianten der Ansteuerung von Lüftergebläse 10, Warnleuchte 37 und Summer 38 sowie dem Relais 39 zur Zündstromunterbrechung möglich:

- Variante 1 und 2 entsprechen dem anhand Fig. 2 beschriebenen Ausführungen: Ein Temperaturwert vom Temperatursensor 31 wird mit einem Referenzwert verglichen und bei Überschreiten des Referenzwertes das Lüftergebläse 10 angesteuert, sofern entweder die Motorhaube geschlossen oder die Motorhaube geöffnet und der Zündstromschalter 22 geschlossen ist.

- Variante 3 sieht vor, bei überschrittenem Grenzwert und geöffneter Motorhaube das Lüftergebläse abzuschalten sowie das Relais 39 zur Zündstrom- und/oder Kraftstoffzufuhrunterbrechung und die Warnleuchten 37 oder den Summer 38 anzusteuern.

- Bei Variante 4 schließlich werden nach Überschreiten des Referenzwertes und geöffneter Motorhaube zunächst die Signalgeber 37 und 38, und nach einigen Sekunden das Relais 39 zum Abstellen der Brennkraftmaschine angesteuert, sofern nicht in der Zwischenzeit von der Wartungsperson mittels des im Brennkraftmaschinenraum zugänglichen Tastschalters 43 das Lüftergebläse 10 angesteuert wurde, das sich dann, wenn der Temperaturwert den Referenzwert unterschreitet, wieder selbsttätig abschaltet.

Allen Varianten gemeinsam ist, daß bei geschlossener Motorhaube die normale Temperatursteuerfunktion (Einschalten des Lüftergebläses bei Überschreiten und Abschalten bei Unterschreiten des Referenzwerts) voll erhalten ist.

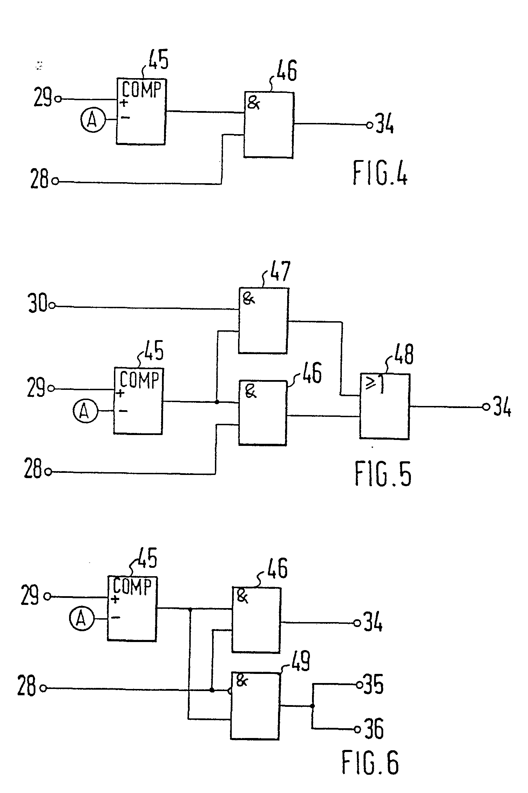

Die in den nachfolgenden Fig. 4 bis 7 dargestellten Schaltbilder zeigen eine innere Verschaltung des Steuergeräts 27 zwischen seinen Eingängen 28 bis 30 und 42 und seinen Ausgängen 34 bis 36. Auf die Darstellung der internen Stromversorgung wurde aus Gründen der Übersichtlichkeit verzichtet, ebenso wie auf die Darstellung üblicher Koppelbausteine an Ein- und Ausgängen; diese Koppelbausteine können in bekannter Weise Mittel zur Signalaufbereitung und/oder Potentialtrennung, sowie Treiber und elektronische oder elektromagnetische Schaltglieder umfassen.

Fig. 4 zeigt eine Grundkonfiguration entsprechend Variante 1, die im wesentlichen auch in allen weiteren Varianten enthalten ist. Über einen Komparator 45 wird ein am Eingang 29 anliegender Temperaturwert des Temperaturgebers 31 mit einem Referenzwert A verglichen; der Komparator 45 gibt bei Überschreiten des Referenzwerts ein Signal ab. Dieses wird von einem UND- Glied 46 nur dann auf den Ausgang 34 zur Ansteuerung des Lüftergebläses geschaltet, wenn gleichzeitig ein Signal am Eingang 28 anliegt, also die Motorhaube geschlossen ist.

In Fig. 5 ist diese Schaltung, entsprechend Variante 2, um ein weiteres UND- Glied 47 und ein ODER- Glied 48 erweitert. Das UND- Glied 47 überwacht zusätzlich, ob die Zündung (Eingang 30) des Kraftfahrzeugs eingeschaltet ist und gibt ein Signal nur dann ab, wenn gleichzeitig vom Komparator 45 ein Signal ansteht. Die Ausgänge der UND- Glieder 46 und 47 werden über ein ODER- Glied 48 zusammengefaßt auf den Ausgang 34 gelegt.

Fig. 6 (Variante 3) enthält wieder die Funktion der Fig. 4; diese ist um ein UND- Glied 49 erweitert, das mit dem Signal vom Komparator 45 und dem negierten Signal vom Eingang 28 beaufschlagt ist und bei geöffneter Motorhaube und überschrittenem Referenzwert am Komparator 45 die Signalgeber am Ausgang 36, und am Ausgang 35 das Relais 39 zum Abschalten der Zündung ansteuert.

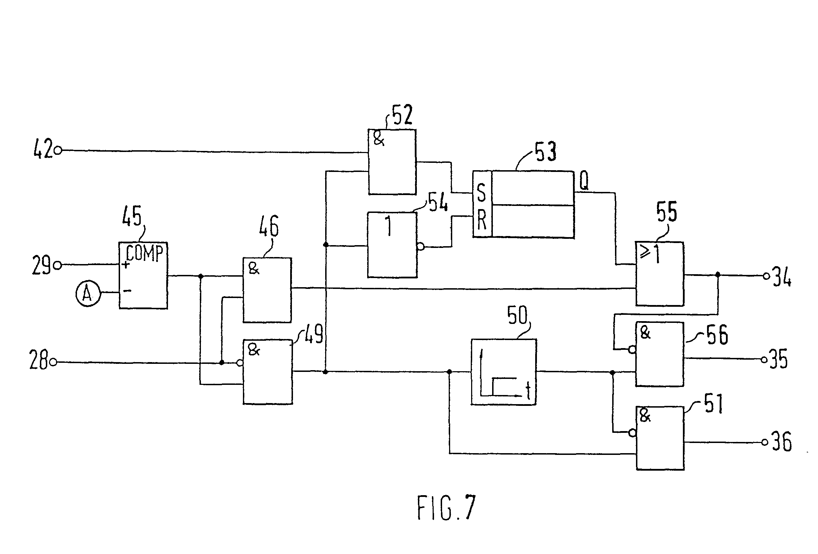

In Fig. 7 ist diese Schaltung, entsprechend Variante 4, um ein Zeitglied 50 erweitert, das das Signal vom UND- Glied 49 um ca. zehn Sekunden verzögert. Während dieser Verzögerungszeit, die mittels eines UND- Glieds 51 erfaßt wird, in dem seine Eingänge mit dem Signal vor dem Zeitverzögerungsglied 50 und mit dem negierten Signal an dessen Ausgang beaufschlagt werden, werden die Signalgeber 37 und 38 am Ausgang 36 angesteuert.

Das Lüftergebläse muß hierbei über einen Tastschalter 43 manuell angesteuert werden. Dazu erhält ein UND- Glied 52 ein Signal des Tastschalters 43 über den Eingang 42. Der zweite Eingang des UND- Glieds 52 wird mit dem Ausgang des UND- Glieds 49 beaufschlagt. Sein Ausgang ist mit einem Setzeingang S eines R-S-Flip-Flops 53 verbunden; dessen Rücksetzeingang R wird mit dem durch einen Inverter 54 invertierten Ausgangssignal des UND- Glieds 49 beaufschlagt. Die Bauelemente 52 bis 54 stellen eine Selbsthalteschaltung dar, die bei angesprochenem Komparator 45 mittels des Tastschalters 43 gesetzt und bei Unterschreiten des Referenzwerts A am Komparator 45 wieder zurückgesetzt werden kann. Mit einem Ausgang Q des R-S-Flip-Flops 53 (oder dem Ausgang des UND- Glieds 46) wird über ein ODER- Glied 55 der Ausgang 34 (Lüftergebläse) angesteuert.

Erfolgt während der Ansteuerzeit (= Verzögerungszeit) der Signalgeber keine Auslösung des Tastschalters 42 und damit kein Ansteuern des Lüftergebläses, so wird über ein UND- Glied 56 das Relais 39 zur Unterbrechung der Zündung angesteuert. Das UND- Glied 56 erhält hierzu ein negiertes Signal vom ODER- Glied 55 und ein Signal vom Zeitverzögerungsglied 50.

Selbstverständlich kann das Steuergerät ebenso mittels eines Mikrorechnersystems aufgebaut werden, das dann die Funktion der logischen Bausteine, des Komparators und des Zeitverzögerungsglieds übernimmt. Ebenso kann anstatt des Elektromotors 16 auch eine Elektromagnetkupplung eines von der Brennkraftmaschine angetriebenen Lüfters durch eine der Schaltungen nach Fig. 2 bis 7 angesteuert werden.

## Patentansprüche

1. Kühlanlage für Brennkraftmaschinen mit wenigstens einem zuschaltbaren Lüftergebläse, das innerhalb eines mittels einer Klappe verschließbaren Raums, insbesondere eines mit einer Motorhaube verschließbaren Brennkraftmaschinenraums einer Karosserie eines Fahrzeugs angeordnet ist, *dadurch gekennzeichnet*, daß das Lüftergebläse (10) bei geöffneter Klappe (12') abgeschaltet und/oder in einen Zustand steuerbar ist, der einen überraschenden Wiederanlauf nach einer vorangegangenen Abschaltung verhindert.

2. Kühlanlage nach Anspruch 1, *dadurch gekennzeichnet*, daß lediglich bei geöffneter Klappe (12') und abgestellter Brennkraftmaschine (3) das Lüftergebläse (10) abgeschaltet oder sein Wiederanlaufen verhindert wird.

3. Kühlanlage nach Anspruch 1 oder 2, *dadurch gekennzeichnet*, daß bei einem durch ein optisches und/oder akustisches Signal angekündigten erhöhten Kühlluftbedarf das Lüftergebläse (10) manuell zugeschaltet werden kann.

4. Kühlanlage nach Anspruch 3, *dadurch gekennzeichnet*, daß die Brennkraftmaschine (3) bei Überschreiten einer höchstzulässigen Temperatur automatisch abgestellt wird.

5. Kühlanlage nach wenigstens einem der vorangehenden Ansprüche, *dadurch gekennzeichnet*, daß die Schließstellung der Klappe (12') in an sich bekannter Weise mittels eines von ihr betätigten Schalters (13) überwacht wird.

6. Kühlanlage nach wenigstens einem der Ansprüche 1 bis 4, *dadurch gekennzeichnet*, daß der Schalter (13) ein Quecksilberschalter ist.

7. Kühlanlage nach Anspruch 5 oder 6, *dadurch gekennzeichnet*, daß das Lüftergebläse (10) elektromotorisch oder von der Brennkraftmaschine (3) über eine Elektromagnetkupplung angetrieben und bei geöffneter Klappe (12') durch den Schalter (13) direkt oder über ein Relais (26) von seiner/ihrer Stromversorgung (21) getrennt wird.

8. Kühlanlage nach Anspruch 7, *dadurch gekennzeichnet*, daß der Schalter (13) ein Steuergerät (27) des Lüftergebläses (10) beeinflußt.

## Revendications

1. Installation de refroidissement de moteurs à combustion interne, comportant au moins une soufflante commutable disposée à l'intérieur d'un

EP 0 215 219 B1

compartiment obturable à l'aide d'un volet, en particulier d'un compartiment de moteur d'une carrosserie de véhicule, caractérisée en ce que, lorsque le volet (12') est ouvert, la soufflante (10) est mise hors service et/ou susceptible d'être commandée en un état empêchant un redémarrage par surprise après la mise hors service effectuée au préalable.

2. Installation de refroidissement selon la revendication 1, caractérisée en ce que la soufflante (10) n'est mise hors service ou son redémarrage est empêché que lorsque le volet (12') est ouvert et que le moteur (3) est arrêté.

3. Installation de refroidissement selon la revendication 1 ou 2, caractérisée en ce que la soufflante (10) peut être mise en service manuellement lors de l'apparition d'un besoin accru en refroidissement, indiqué par un signal optique et/ou acoustique.

4. Installation de refroidissement selon la revendication 3, caractérisée en ce que le moteur (3) est arrêté automatiquement lors du dépassement d'une température maximale admissible.

5. Installation de refroidissement selon au moins l'une des revendications précédentes, caractérisée en ce que la position de fermeture du volet (12') est surveillée de manière connue en soi à l'aide d'un interrupteur (13) actionné par ce dernier.

6. Installation de refroidissement selon au moins l'une des revendications 1 à 4, caractérisée en ce que l'interrupteur (13) est un interrupteur à mercure.

7. Installation de refroidissement selon la revendication 5 ou 6, caractérisée en ce que la soufflante (10) est entraînée par moteur électrique ou par le moteur (3), par l'intermédiaire d'un embrayage électromagnétique, et qu'elle est isolée de son alimentation électrique (21) lorsque le volet (12') est ouvert, directement par l'interrupteur (13) ou par l'intermédiaire d'un relais (26).

8. Installation de refroidissement selon la revendication 7, caractérisée en ce que l'interrupteur (13) influence un appareil de commande (27) de la soufflante (10).

**Claims**

1. A cooling arrangement for internal combustion engines, with at least one connectable cooling fan which is arranged inside a space closable by means of a flap, in particular an internal-combustion-engine space - closable by an engine bonnet - of a vehicle body, characterized in that the cooling fan (10) is switched off when the flap (12') is opened and/or can be put into a state which prevents an unexpected restarting after previously being switched off.

2. A cooling arrangement according to Claim 1, characterized in that the cooling fan (10) is switched off, or its restarting is prevented, only when the flap (12') is opened and the internal combustion engine is switched off.

3. A cooling arrangement according to Claim 1 or 2, characterized in that the cooling fan (10) can be switched on manually if increased cooling air is required as indicated by an optical end/or acoustic signal.

4. A colling arrangement according to Claim 3, characterized in that the in ternal combustion engine (3) is switched off automatically when the maximum permitted tempereture is exceeded.

5. A cooling arrangement according to any one of the preceding Claims, characterized in that the closed position of the flap (12') is monitored in a manner known per se by means of a switch (13) actuated by the flap.

6. A cooling arrangement according to at least one of Claims 1 to 4, characterized in that the switch (13) is a mercury switch.

7. A cooling arrangement according to Claim 5 or 6, characterized in that the cooling fan (10) is driven by an electric motor or by the internal combustion engine (3) by way of an electromagnetic clutch, and when the flap (12') is opened is cut off from its current supply (21) by the switch (13) directly or by way of a relay (26).

8. A cooling arrangement according to Claim 7, characterized in that the switch (13) acts upon a control device (27) of the cooling fan (10).

FIG.1

FIG.2

FIG.3

FIG.4

FIG.5

FIG.6

FIG.7